# EUROPEAN PATENT APPLICATION

(11) **EP 1 641 305 A1**
(43) Date of publication of application: **29.03.2006**
(21) Application number: 04746823.6
(22) Date of filing: 25.06.2004
(51) Int. Cl.: H04Q 7/38

(54) **RECEIVER APPARATUS**

(30) Priority: 30.06.2003 JP 2003187336
(71) Applicant: MITSUBISHI DENKI KABUSHIKI KAISHA, Tokyo 100-8310 (JP)
(72) Inventor: YANO, Yasuhiro, Mitsubishi Denki Kabushiki Kaisha, Chiyoda-ku, Tokyo 1008310 (JP)
(74) Representative: Popp, Eugen
(86) International application number: PCT/JP2004/009354
(87) International publication number: WO 2005/002271

(57) **Abstract**

A receiver (mobile unit) according to the present invention includes, for detecting a mobile unit ID that is specific to the mobile unit and is superimposed on transmission data transmitted through a control common channel, a mobile unit ID modulation removing unit (2) that removes a modulation by the mobile unit ID from a received signal; a transmission data determining and modulation removing unit (3) that decodes the modulation-removed received signal, re-encodes a decoding result, and removes a modulation by the transmission data from the modulation-removed received signal by using a re-encoding result; and a self mobile unit ID transmission/non-transmission determining unit (4) that measures a quality of the received signal from which the modulation by the mobile unit ID and the modulation by the transmission data are removed, and determines whether the self mobile unit ID is included in the control common channel based on a measurement result of the quality.

## Description

### TECHNICAL FIELD

The present invention relates to a receiver that determines whether a signal addressed to the own device is included in a received signal by detecting an identifier (ID), which is allocated to each receiver constituting a system, of the own device from the received signal. More specifically, the present invention relates to a receiver that can ensure a detection of the ID even when the condition of a transmission channel (a transmission channel environment) greatly changes.

### BACKGROUND ART

A study of performing packet transmission, which is being performed on the Internet, on a downlink channel for mobile communications is currently underway. Unlike the conventional channel switching communication, a packet communication enables changing a transmission rate according to a user's request and adaptively distributing communication resources. In addition, the packet communication enables efficient use of a communication channel by temporarily suspending a communication with a user who performs the communication without access control. To perform the packet transmission on the downlink channel for mobile communications, however, it is necessary to provide a mechanism in which a base station transmits, to a mobile unit (a receiver), information on the communication resources and information on an identifier specific to the mobile unit (hereinafter, "a mobile unit ID") indicating a destination of a packet.

For downlink packet transmission according to High Speed Downlink Packet Access (HSDPA) being standardized by 3rd Generation Partnership Project (3GPP), which is a standardization group for a third-generation mobile communications system, two channels are designated as physical channels. Namely, a packet transmission physical channel for packets and a control physical channel for control information are prepared, and shared among a plurality of mobile units. The base station transmits the mobile unit ID and information on the communication resources indicating a size of a packet transmitted to each mobile unit and the like, through the control physical channel so that each mobile unit can recognize the packet addressed to the own device. Each mobile unit determines whether its own mobile unit ID (hereinafter, "a self mobile unit ID") is included in a signal on the control physical channel, and based on the result of the determination, determines whether to demodulate a signal on the packet transmission physical channel.

One example of a method of the mobile unit determining whether the self mobile unit ID is included in a signal on the control physical channel will be explained next. It is assumed herein that the base station scrambles transmission data, which has been subjected to an error correction coding and a rate matching, using the mobile unit ID.

The mobile unit generates self mobile unit ID codes used for scrambling the transmission data, from the mobile unit ID allocated to the own device in advance. Using the mobile unit ID codes, the mobile unit performs a modulation removal processing for removing a modulation from target data detected by, for example, a wireless demodulation unit. Thereafter, the mobile unit performs an error correcting decoding and a rate dematching (that is, a reversal processing of the rate matching) on the data after the modulation removal processing. Then, the mobile unit determines whether the self mobile unit ID is included in the data using an amount of information obtained in the above process, for example, path metrics.

Specific examples of the determination using the path metrics include "Viterbi Path Metric Difference (VPMD) Algorithm" (see Non-patent Literature 1). The Viterbi decoding is widely used to decode error correcting codes. In the above example, when the difference between two path metrics, from which a survival path is selected, is greater than a predetermined threshold, the mobile unit determines that the self mobile unit ID is included in the data.

If the mobile unit ID is transmitted through the control physical channel shared among a plurality of mobile units and the mobile unit ID is subjected to the error correction coding, the mobile unit determines whether the self mobile unit ID is included in the data using the path metrics obtained through the error correcting code decoding. This conventional technique can greatly reduce processing time required to determine whether the mobile unit ID is included, as compared with a method of determining whether the mobile unit ID is correctly demodulated after demodulating all transmission data in one sub-frame and detecting errors therein using CRC bits, in other words, a method of determining whether the mobile unit ID is included after completing demodulating all the data of one sub-frame.

Non-patent Literature 1. Lucent technologies, "Performance of the HS-SCCH", Tdoc R1-02-0649, 3GPP TSG-RAM WG1#25, Paris, France, April 9-12, 2002

However, the conventional mobile unit has the following disadvantage. Since the path metrics obtained in the decoding depend on the transmission channel environment. In other words, the path metrics are greatly varied according to the transmission channel environment. As a result, there is a probability that the mobile unit ID cannot be determined correctly.

The present invention has been achieved in view of the above problems. It is an object of the present invention to provide a receiver that can determine whether the self mobile unit ID is included in the signal on the control physical channel shared among a plurality of users, regardless of the transmission channel environment.

### DISCLOSURE OF INVENTION

To solve the above problems and achieve the object, a receiver is allocated a self identifier specific to the receiver and detects the self identifier superimposed on transmission data and transmitted through a common channel shared among a plurality of receivers. The receiver includes: an identifier modulation removing unit that removes a modulation by the identifier from a received signal; a transmission data modulation removing unit that decodes the modulation-removed received signal, re-encodes a decoding result, and removes a modulation by the transmission data from the modulation-removed received signal using a re-encoding result; and an identifier transmission/non-transmission determining unit that measures a quality of the received signal from which the modulation by the identifier and the modulation by the transmission data are removed, and that determines whether the self identifier is included in the common channel based on a quality measurement result.

According to the present invention, if the mobile unit ID, for example, of each mobile unit is transmitted through the control physical channel, the mobile unit determines whether the self mobile unit ID is transmitted based on the measurement result of the quality of a received signal.

### BRIEF DESCRIPTION OF DRAWINGS

Fig. 1 is a diagram of a receiver according to the present invention;
Fig. 2 is a diagram for explaining a transmission data generation processing;
Fig. 3 is a diagram of a self mobile unit ID transmission/non-transmission determining unit according to a first embodiment of the present invention; and
Fig. 4 is a diagram of a self mobile unit ID transmission/non-transmission determining unit according to a second embodiment of the present invention.

### BEST MODE(S) FOR CARRYING OUT THE INVENTION

Exemplary embodiments of a receiver (a communication device on a receiver side) according to the present invention will be explained below in detail with reference to the accompanying drawings. Note that the invention is not limited by the following embodiments.

### FIRST EMBODIMENT

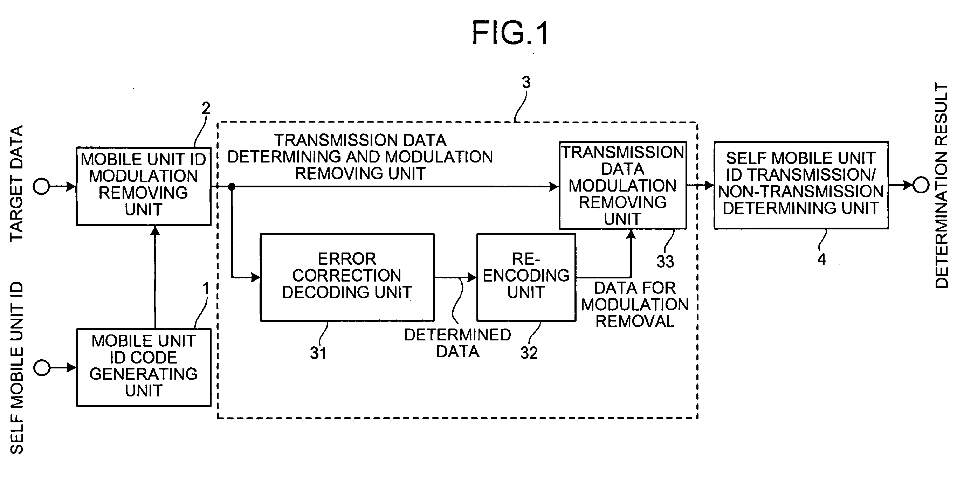

Fig. 1 is a diagram of a mobile unit (a receiver) according to the present invention. The receiver includes a mobile unit ID code generating unit 1, a mobile unit ID modulation removing unit 2, a transmission data determining and modulation removing unit 3, and a self mobile unit ID transmission/non-transmission determining unit 4. The transmission data determining and modulation removing unit 3 includes an error correction decoding unit 31, a re-encoding unit 32, and a transmission modulation removing unit 33. In this embodiment, a transmission data generation processing is executed based on a 3GPP Standard "TS25.212 Version 5.4.0", and control information generated by the processing is transmitted through the control physical channel.

Before explaining characteristic operations performed by the receiver according to the first embodiment, the transmission data generation processing (transmitter-side processing) based on the 3GPP Standard "TS25.212 Version 5.4.0" is explained.

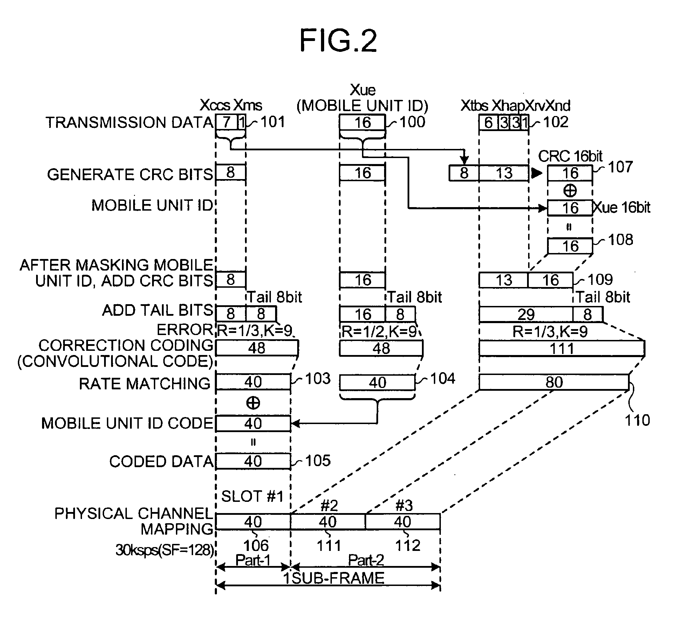

Fig. 2 is a diagram for explaining the transmission data generation processing. In Fig. 2, transmission data before the processing is shown at the uppermost position and the transmission data after the processing is shown at the lowermost position. The mobile unit reproduces original transmission data by performing a reversal processing of the processing shown in Fig. 2. According to the 3GPP, a unit of control information (hereinafter, "sub-frame") transmitted on the control physical channel includes three slots (3×0.667 milliseconds). A value of each data shown in Fig. 2 represents the number of bits. The transmission data at the uppermost position includes a plurality of elements such as seven-bit Xccs relating to spreading codes. The elements include a 16-bit mobile unit ID 100 that is identification information of a destination mobile unit.

For example, the transmission data is divided into a first group 101, the mobile unit ID 100, and a second group 102. A transmitter performs an error correction coding, a rate matching (a processing for matching an amount of transmission data to the data amount transmittable in the transmission format), and the like on the first group 101 to generate a 40-bit code 103. Likewise, the transmitter performs the error correction coding, the rate matching, and the like on the mobile unit ID 100 to generate a 40-bit code 104. Thereafter, the transmitter scrambles the code 103 by the code 104, and maps the resultant code 105 to a first slot 106 of the sub-frame transmitted through the control physical channel. Since the rate-matched codes 103 and 104 are binary, the scrambling can be realized by modulo-2 addition (that is, Exclusive-OR operation).

On the other hand, the transmitter scrambles cyclic redundancy check (CRC) bits 107 of the first group 101 and the second group 102 by the mobile unit ID 100 to generate a resultant code 108. Thereafter, the transmitter adds the resultant code 108 to the end of the second group 102, thereby generating a code 109. Finally, the transmitter performs the error correction coding and the rate matching on the code 108, and maps a resultant code 110 to a second slot 111 and a third slot 112 of the sub-frame.

Operations performed by the mobile unit shown in Fig. 1 will be explained. The ID code generating unit 1, which receives the self mobile unit ID allocated to the own device in advance, outputs self mobile unit ID codes superimposed on the transmission data. The mobile unit ID modulation removing unit 2 performs the mobile unit ID code modulation removal (descrambling) on a target data detected by, for example, a wireless demodulation unit using the mobile unit ID codes. The modulation removal can be normally realized by the modulo-2 addition. When the mobile unit ID is superimposed on the transmission data without being coded, the processing performed by the mobile unit ID code generating unit 2 can be omitted.

In the transmission data determining and modulation removing unit 3 that receives the modulation-removed target data, the error correction decoding unit 31 decodes the target data which has been subjected to the error correction coding by the transmitter, and determines the transmission data included therein. The re-encoding unit 32 performs error correction coding on the determination result again, and generates a replica of the target data. Finally, the transmission data modulation removing unit 33 performs transmission data modulation removal processing on the modulation-removed target data, using the replica. The modulation removal processing can also be realized by modulo-2 addition.

The self mobile unit ID transmission/non-transmission determining unit 4 measures a quality of an output of the transmission data determining and modulation removing unit 3. Then, based on the measurement result, the self mobile unit ID transmission/non-transmission determining unit 4 determines whether the self mobile unit ID is included in the target data. Through the above processing, both of a modulation component by the self mobile unit ID and a modulation component by the transmission data are removed from the output of the transmission data determining and modulation removing unit 3. Therefore, in case the target data includes the self mobile unit ID and the transmission data and does not include transmission errors due to the transmission channel, the transmission data determining and modulation removing unit 3 outputs non-modulated data (uniform in polarity and value). Thus, the measurement result shows a better quality when the target data includes the self mobile unit ID, as compared with the case when the target data does not include the self mobile unit ID.

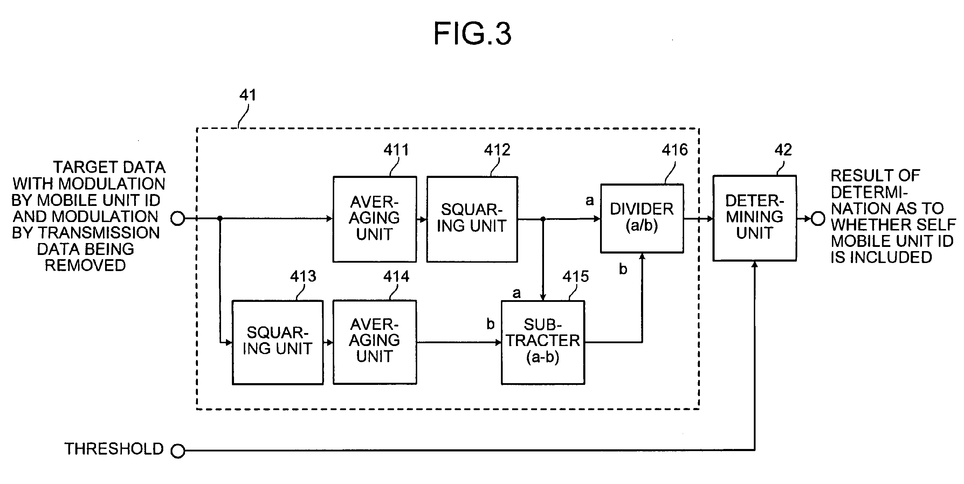

Fig. 3 is a diagram of the self mobile unit ID transmission/non-transmission determining unit 4 according to the first embodiment. The self mobile unit ID transmission/non-transmission determining unit 4 includes a quality measurement unit 41 and a determining unit 42. The quality measurement unit 41 includes averaging units 411 and 412, squaring units 412 and 413, a subtracter 415, and a divider 416.

For example, when the target data, from which the modulation by the self mobile unit ID and the modulation by the transmission data have been removed, is input to the quality measurement unit 41, the averaging unit 411 and the squaring unit 412 calculate a square of an average (corresponding to signal power S). The squaring unit 413 and the averaging unit 414 also calculate an average of a squaring result. The subtracter 415 subtracts the average of the squaring result from the signal power S, thereby calculating a distribution of the target data (corresponding to interference and noise power I). The divider 416 calculates a ratio of the square of the average to the distribution, thereby calculating a quality of the target data (corresponding to a desired signal to interference power ratio (SIR)). The determining unit 42 compares the quality with a determination threshold. When the quality is equal to or higher than the threshold, the determining unit 42 determines that the self mobile unit ID is included in the target data. It is noted that the quality obtained herein represents a Euclidian distance between the original target data and a data, which is generated using the self mobile unit ID and the transmission data determined by the mobile unit, while making the both data uniform in level. The determining unit 42 makes the determination based on the Euclidian distance.

According to the first embodiment, the mobile unit determines whether the self mobile unit ID is transmitted on the control physical channel based on the measurement result of the quality of received data. It is, therefore, possible to ensure making the determination, whether the transmission channel environment is good or not.

### SECOND EMBODIMENT

The second embodiment of the present invention simplifies the configuration of the quality measurement unit 41 explained in the first embodiment, thereby reducing circuit scale.

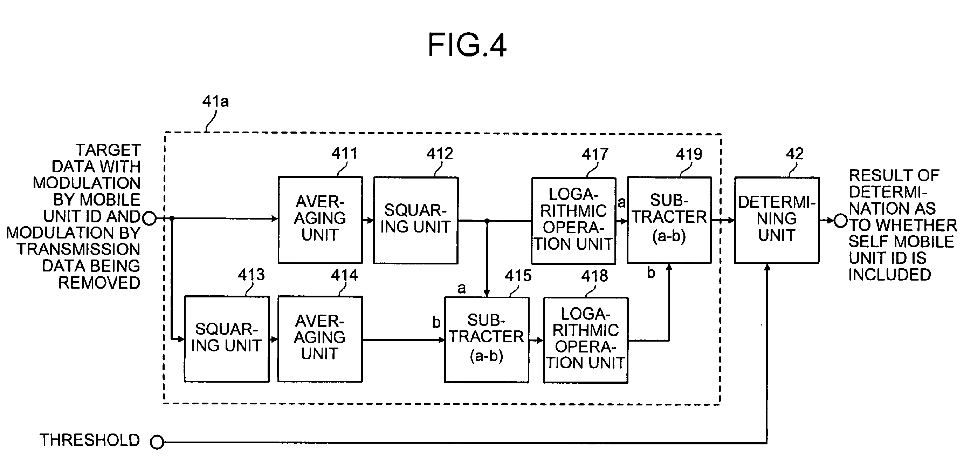

Fig. 4 is a diagram of the self mobile unit ID transmission/non-transmission determining unit 4 according to the second embodiment. The self mobile unit ID transmission/non-transmission determining unit 4 includes a quality measurement unit 41a and the determining unit 42. The quality measurement unit 41a includes logarithmic operation units 417 and 418 and a subtracter 419. The quality measurement unit 41a differs from the quality measurement unit 41 in that the logarithmic operation units 417 and 418 and the subtracter 419 are provided in place of the divider 416. Since the mobile unit according to the second embodiment is equal in overall configuration to that according to the first embodiment, like constituent elements are denoted by the same reference numerals and they will not be explained herein. In the second embodiment, operations different from those according to the first embodiment will be explained.

In the second embodiment, the division processing performed by the divider 416 for obtaining the quality of the target data is replaced by a subtraction processing (a processing performed by the subtracter 419) after logarithmic operations (processings performed by the logarithmic operation units 417 and 418). The division processing and the subtraction processing after the logarithmic operation are functionally equal. However, a circuit for realizing multiplication and division processings is larger in scale than a circuit for realizing addition and subtraction processings. Therefore, the circuit scale of the mobile unit according to the second embodiment can be reduced, as compared with that according to the first embodiment. The logarithmic operation units 417 and 418 can be realized by either table look-up or a circuit performing approximation. As bases of natural logarithms, arbitrary numeric values such as 10 or 2 can be used in the logarithmic operation unit 417 and 418 by appropriately changing the determination threshold.

According to the second embodiment, the logarithmic operation units and the subtracter, which are small in circuit scale, are used for obtaining the quality of the target data without using the divider, which is large in circuit scale. It is thereby possible to realize identical functions to those according to the first embodiment while reducing the circuit scale.

In the first and the second embodiments, the determination whether the self mobile unit ID is present is performed on one target data. Practically, however, as described in 3GPP standards TS25.212 Version 5.4.0 and TS25.211 Version 5.3.0, (a plurality of) mobile unit IDs are often transmitted in parallel (simultaneously) using a plurality of spreading codes. In this case, it is necessary to prepare a plurality of target data.

In this case, quality measurement units 41 or 41a according to the first or the second embodiment needs to be prepared as many as the target data, or the quality measurement unit 41 or 41a is used in a time division manner. Furthermore, the measurement results of the quality of the respective target data are obtained and compared, and the data having the best quality is selected. Thereafter, the determining unit 42 makes an absolute determination to the quality. In the measurement result comparison, a relative threshold, for example, can be used to determine, for example, that the self mobile unit ID is not transmitted when differences are equal to or greater than a certain value, thereby enhancing a determination performance. Thus, even if a plurality of mobile unit IDs are transmitted in parallel on the control physical channels, it is possible to ensure determining whether the self mobile unit ID is transmitted while reducing the circuit scale.

### INDUSTRIAL APPLICABILITY

As explained so far, the receiver according to the present invention is effective for a communication system that complies with the 3GPP standard, and particularly for a wireless communication system expected to go through a great change in the transmission channel environment.

## Claims

1. A receiver that is allocated a self identifier specific to the receiver and that detects the self identifier superimposed on transmission data and transmitted through a common channel shared among a plurality of receivers, the receiver comprising:
an identifier modulation removing unit that removes a modulation by the identifier from a received signal;
a transmission data modulation removing unit that decodes the modulation-removed received signal, re-encodes a decoding result, and removes a modulation by the transmission data from the modulation-removed received signal using a re-encoding result; and
an identifier transmission/non-transmission determining unit that measures a quality of the received signal from which the modulation by the identifier and the modulation by the transmission data are removed, and that determines whether the self identifier is included in the common channel based on a quality measurement result.

2. The receiver according to claim 1, wherein the identifier transmission/non-transmission determining unit measures the quality based on a Euclidian distance.

3. The receiver according to claim 1, wherein the identifier transmission/non-transmission determining unit determines whether the identifier is included in the common channel based on a specific threshold.

4. The receiver according to claim 2, wherein the identifier transmission/non-transmission determining unit determines whether the identifier is included in the common channel based on a specific threshold.

5. The receiver according to claim 1, wherein when a plurality of identifiers are simultaneously transmitted on the common channel using a plurality of transmission codes, the identifier transmission/non-transmission determining unit measures the quality of the received signal for each transmission code, compares the measured qualities, selects the transmission code ensuring a best quality, and determines whether the self identifier is included in the common channel based on a selection result.

6. The receiver according to claim 2, wherein when a plurality of identifiers are simultaneously transmitted on the common channel using a plurality of transmission codes, the identifier transmission/non-transmission determining unit measures the quality of the received signal for each transmission code, compares the measured qualities, selects the transmission code ensuring a best quality, and determines whether the self identifier is included in the common channel based on a selection result.

7. The receiver according to claim 3, wherein when a plurality of identifiers are simultaneously transmitted on the common channel using a plurality of transmission codes, the identifier transmission/non-transmission determining unit measures the quality of the received signal for each transmission code, compares the measured qualities, selects the transmission code ensuring a best quality, and determines whether the self identifier is included in the common channel based on a selection result.

8. The receiver according to claim 4, wherein when a plurality of identifiers are simultaneously transmitted on the common channel using a plurality of transmission codes, the identifier transmission/non-transmission determining unit measures the quality of the received signal for each transmission code, compares the measured qualities, selects the transmission code ensuring a best quality, and determines whether the self identifier is included in the common channel based on a selection result.

9. The receiver according to claim 5, wherein the identifier transmission/non-transmission determining unit compares the measured qualities using a relative threshold.

10. The receiver according to claim 6, wherein the identifier transmission/non-transmission determining unit compares the measured qualities using a relative threshold.

11. The receiver according to claim 7, wherein the identifier transmission/non-transmission determining unit compares the measured qualities using a relative threshold.

12. The receiver according to claim 8, wherein the identifier transmission/non-transmission determining unit compares the measured qualities using a relative threshold.
